(19) Europäisches Patentamt
European Patent Office
Office européen des brevets

(11) **EP 2 914 005 B1**

(12) **FASCICULE DE BREVET EUROPEEN**

(45) Date de publication et mention
de la délivrance du brevet:
**14.12.2016 Bulletin 2016/50**

(51) Int Cl.:
***H04N 19/89*** *(2014.01)*     ***H04N 19/517*** *(2014.01)*
***H04N 17/00*** *(2006.01)*

(21) Numéro de dépôt: **15156320.2**

(22) Date de dépôt: **24.02.2015**

(54) **Générateur de flux vidéo**

Video-Stream-Generator

Video stream generator

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.02.2014 FR 1451634**

(43) Date de publication de la demande:
**02.09.2015 Bulletin 2015/36**

(73) Titulaire: **Allegro DVT
38240 Meylan (FR)**

(72) Inventeurs:
- **Alaiwan, Sébastien
  38000 Grenoble (FR)**
- **Barbier, Frédéric
  38000 Grenoble (FR)**

(74) Mandataire: **Thibon, Laurent
Cabinet Beaumont
1, rue Champollion
38000 Grenoble (FR)**

(56) Documents cités:
**JP-A- 2008 131 484**     **KR-A- 20100 087 908**
**US-A- 5 706 002**     **US-B1- 7 076 392**

- **JINHYUN CHO ET AL: "Constrained-random
  bitstream generation for H.264/AVC decoder
  conformance test", IEEE TRANSACTIONS ON
  CONSUMER ELECTRONICS, IEEE SERVICE
  CENTER, NEW YORK, NY, US, vol. 56, no. 2, 1 mai
  2010 (2010-05-01), pages 848-855, XP011312747,
  ISSN: 0098-3063**

## Description

Domaine

La présente description concerne le domaine des procédés et dispositifs pour générer des flux vidéo de test, et en particulier pour générer un flux vidéo compressé apte à tester un décodeur de vidéo.

Arrière-plan

Les normes de codage de vidéo, comme la norme ISO H.264 MPEG4 AVC et la norme MPEG HEVC (codage vidéo à haute efficacité), définissent de nombreux modes de fonctionnement différents. Un décodeur vidéo conçu pour décoder de la vidéo compressée selon une telle norme de codage vidéo doit en général être capable de décoder correctement de la vidéo dans tous les modes de fonctionnement.

Afin de permettre à un concepteur de tester rigoureusement la conception d'un décodeur pendant les phases de développement, on a proposé d'appliquer un flux de test, c'est à dire un flux de vidéo compressée conformément à la norme concernée, au décodeur. La sortie vidéo décompressée générée par le décodeur est ensuite comparée à une sortie vidéo de référence qui est connue pour être la décompression correcte du flux de test. Le flux de test devrait couvrir de façon exhaustive les modes de fonctionnement du décodeur qui doivent être testés.

Les solutions courantes pour générer des flux de test pour une norme de codage donnée ont des inconvénients en ce qui concerne la couverture du test et/ou le temps de conception. En effet, la production d'un flux de test ayant une couverture de test relativement complète est actuellement un processus lent, ce qui conduit à un temps de disponibilité sur le marché relativement long pour des décodeurs vidéo basés sur de nouvelles normes de codage.

La publication de Jinhyun Cho et al. ayant comme titre "Constrained-Random Bitstream Generation for H.264/AVC Decoder Conformance Test", IEEE Transactions on Consumer Electronics, IEEE Service Center, New York, NY, US, Vol. 56, no.2, 1 May 2010, pages 848-855, décrit un procédé de test de flux de vidéo pour un test de conformité d'un décodeur H.264/AVC sans utiliser des séquences d'image en entrée.

JP2008-131484A divulgue une méthode pour générer un flux test aléatoire sans utiliser un encodeur. US7076392 divulgue un générateur de flux test conforme à une syntaxe prédéfinie pour tester un décodeur.

Résumé

Un objet de modes de réalisation de la présente invention est de résoudre au moins partiellement un ou plusieurs inconvénients de l'art antérieur.

Selon un aspect, on prévoit un générateur de flux de test pour générer un flux de vidéo compressée pour tester un décodeur de vidéo, le générateur comprenant : un générateur pseudo-aléatoire conscient du contexte adapté à générer des valeurs pseudo-aléatoires d'éléments de syntaxe sur la base de données de contexte de décodage ; un module de traitement de décodage adapté à traiter les valeurs d'éléments de syntaxe et à générer les données de contexte de décodage et des données de contexte de codage binaire ; et un module de codage binaire adapté à coder les valeurs d'éléments de syntaxe sur la base des données de contexte de codage binaire afin de générer le flux de vidéo compressée.

Selon un mode de réalisation, le module de traitement de décodage est en outre adapté à générer une sortie de vidéo décompressée sur la base des valeurs d'éléments de syntaxe.

Selon un mode de réalisation, le module de codage binaire et le module de traitement de décodage sont adaptés à traiter les éléments de syntaxe conformément à la norme HEVC (codage vidéo à haute efficacité).

Selon un mode de réalisation, le générateur pseudo-aléatoire conscient du contexte est adapté à générer une ou plusieurs des valeurs pseudo-aléatoires sur la base d'une loi de distribution de probabilités, le générateur de flux de test comprenant en outre un contrôleur de couverture adapté à définir au moins une partie de la loi de distribution de probabilité pour un ou plusieurs des éléments de syntaxe.

Selon un mode de réalisation, le contrôleur de couverture est adapté à générer la loi de distribution de probabilité sur la base des données de contexte de décodage et sur la base de données de contexte de couverture indiquant des éléments non couverts à couvrir par le module de traitement de décodage.

Selon un mode de réalisation, le générateur de flux de test comprend en outre un module d'analyse de couverture adapté à générer les données de contexte de couverture sur la base d'une ou plusieurs notifications fournies par le module de traitement de décodage indiquant l'étendue de la couverture de test.

Selon un mode de réalisation, lesdites une ou plusieurs valeurs pseudo-aléatoires sont des valeurs à utiliser pour le calcul d'un ou plusieurs vecteurs de mouvement par le module de traitement de décodage, les vecteurs de mouvement sont utilisés par le module de traitement de décodage pour sélectionner des zones d'une image de référence, et les données de contexte de couverture indiquent une ou plusieurs zones de l'image de référence qui ne sont pas encore sélectionnées et à couvrir par le flux de test.

Selon un autre aspect, on prévoit un procédé de génération, par un générateur de flux de test, d'un flux de vidéo compressée pour tester un décodeur de vidéo, le procédé comprenant : générer, par un générateur pseudo-aléatoire conscient du contexte, des valeurs pseudo-aléatoires d'éléments de syntaxe sur la base de données de contexte de décodage ; traiter, par un module de traitement de décodage, les valeurs d'éléments de syntaxe pour générer les données de contexte de décodage et des données de contexte de codage binaire ; et coder, par un module de codage binaire, les valeurs d'éléments de syntaxe sur la base des données de contexte de codage binaire afin de générer le flux de vidéo compressée.

Selon un mode de réalisation, le procédé comprend en outre le fait de demander, par le module de traitement de décodage, les valeurs d'éléments de syntaxe au générateur pseudo-aléatoire conscient du contexte.

Selon un mode de réalisation, la génération desdites une ou plusieurs valeurs pseudo-aléatoires par le générateur pseudo-aléatoire conscient du contexte est basée sur une loi de distribution de probabilité, le procédé comprenant en outre la définition, par un contrôleur de couverture, d'au moins une partie de la loi de distribution de probabilité pour un ou plusieurs des éléments de syntaxe.

Selon un mode de réalisation, la génération de la loi de distribution de probabilité par le contrôleur de couverture est basée sur les données de contexte de décodage et sur des données de contexte de couverture indiquant des éléments non couverts à couvrir par le module de traitement de décodage.

Selon un mode de réalisation, le procédé comprend en outre la génération, par le module d'analyse de couverture, des données de contexte de couverture sur la base d'une ou plusieurs notifications fournies par le module de traitement de décodage indiquant l'étendue de la couverture de test.

Selon un mode de réalisation, lesdites une ou plusieurs valeurs pseudo-aléatoires sont des valeurs à utiliser pour le calcul d'un ou plusieurs vecteurs de mouvement par le module de traitement de décodage, les vecteurs de mouvement sont utilisés par le module de traitement de décodage pour sélectionner des zones d'une image de référence, et les données de contexte de couverture indiquent une ou plusieurs zones de l'image de référence qui ne sont pas encore sélectionnées et à couvrir par le flux de test.

Selon un autre aspect, on prévoit un procédé de test d'un décodeur comprenant : générer un flux de vidéo compressée conformément au procédé susmentionné ; décoder, par le décodeur, le flux de vidéo compressée pour générer une sortie de vidéo décompressée ; et comparer la sortie de vidéo décompressée à une sortie de vidéo de référence.

Selon un mode de réalisation, le procédé comprend en outre le fait de générer, par le module de traitement de décodage, la sortie de vidéo de référence.

Brève description des dessins

Les caractéristiques et avantages susmentionnés, et d'autres, apparaîtront clairement avec la description détaillée suivante de modes de réalisation, donnés à titre d'illustration et non de limitation, en référence aux dessins joints dans lesquels :

La figure 1 illustre schématiquement un exemple de décodeur vidéo basé sur une syntaxe ;

la figure 2 illustre schématiquement un générateur de flux de test selon un exemple de réalisation de la présente description ;

La figure 3 illustre schématiquement plus en détail un module de traitement de décodage du générateur de flux de test de la figure 2 selon un exemple de réalisation de la présente description ;

la figure 4 est un organigramme illustrant des opérations dans un procédé de génération d'un flux de vidéo compressée pour tester un décodeur de vidéo selon un exemple de réalisation de la présente description ;

la figure 5 illustre schématiquement du matériel pour mettre en oeuvre au moins certaines parties d'un générateur de flux de test selon un exemple de réalisation de la présente description ;

la figure 6 illustre schématiquement un générateur de flux de test selon un autre exemple de réalisation de la présente description ;

la figure 7 est un organigramme illustrant une étape du procédé de la figure 4 plus en détail selon un exemple de réalisation ;

la figure 8A illustre une partie d'une image pendant un traitement selon un exemple de réalisation ; et la figure 8B illustre un exemple de région d'image correspondant à des vecteurs de mouvement à tester selon un exemple de réalisation.

Description détaillée

Dans la description suivante, des modes de réalisation d'un générateur de flux de vidéo compressée sont décrits, ceux-ci étant basés sur la norme MPEG HEVC (codage vidéo à haute efficacité). La spécification décrivant la norme HEVC est par exemple publiée par l'ITU (Union Internationale des Télécommunications) dans la recommandation ITU-T H.265, intitulée : "High efficiency video encoding, SERIES H: AUDIOVISUAL AND MUTLIMEDIA SYSTEMS, Infrastructure of audiovisual services - Coding of moving video", avril 2013, dont le contenu est inclus dans la présente description dans les limites où cela est autorisé par la loi. Un document fournissant une vue d'ensemble de cette norme est intitulé "Overview of the High Efficiency Video Coding (HEVC) Standard", G.Sullivan et al., Pre-publication draft to appear in IEEE Trans. on circuits and systems for video technology, Dec. 2012, dont le contenu est aussi inclus dans la présente description dans les limites où cela est autorisé par la loi.

La façon dont les modes de réalisation décrits ici pourraient être adaptés à d'autres normes de compression basées sur une syntaxe apparaîtra clairement à l'homme de l'art. Comme on va le décrire plus en détail ci-après, une norme de compression basée sur une syntaxe est une norme qui utilise des éléments de syntaxe pour représenter divers aspects d'un flux de vidéo. Par exemple le générateur de flux de test pourrait être adapté pour générer des flux de test selon la norme ISO H.264 MPEG4 AVC, la norme vidéo MPEG-2 ou la norme VP9.

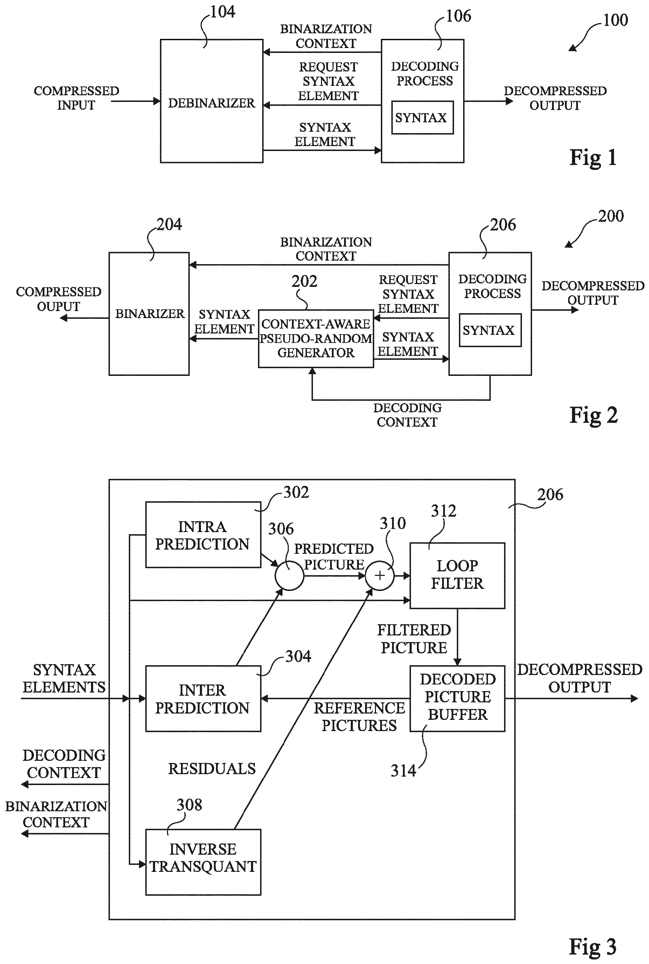

La figure 1 illustre schématiquement un décodeur 100 basé sur une syntaxe selon un exemple de réalisation. Un décodage basé sur une syntaxe implique deux opérations principales : un codage binaire inverse réalisé par un module de codage binaire inverse (DEBINARIZER) 104, suivi d'un processus de décodage réalisé par un module de traitement de décodage (DECODING PROCESS) 106.

Le codage binaire inverse implique la génération d'éléments de syntaxe (SYNTAX ELEMENT) sur la base d'un flux de vidéo d'entrée compressée (COMPRESSED INPUT). En particulier, des requêtes d'éléments de syntaxes (REQUEST SYNTAX ELEMENT) sont reçues du module de traitement de décodage 106, accompagnées de données de contexte de codage binaire (BINARIZATION CONTEXT).

Un élément de syntaxe est un élément de données associé au flux de vidéo, qui indique un paramètre, comme la résolution de la vidéo, un mode de prédiction, un coefficient de filtre, ou n'importe quelles autres données représentant le flux de vidéo. Les valeurs de syntaxe de la norme HEVC sont définies dans la clause 7 à partir de la page 28 jusqu'à la page 52 de la publication référencée précédemment.

Le contexte de codage binaire fournit une correspondance entre des valeurs d'éléments de syntaxe et des séquences de bits. Cette correspondance peut évoluer pendant le processus de décodage afin de parvenir à une meilleure compression. Cette correspondance est entièrement spécifiée dans la norme de compression concernée.

Dans la norme HEVC, les données de contexte de codage binaire représentent les probabilités de valeurs des éléments de syntaxe, et permettent de réaliser un décodage CABAC (codage arithmétique binaire adaptatif en fonction du contexte) par le module de codage binaire inverse 104. Comme le comprendra l'homme de l'art, le codage entropique CABAC est une technique de codage binaire qui implique l'utilisation d'une modélisation de contexte pour obtenir des estimations de probabilités conditionnelles qui sont à leur tour utilisées pour compresser une séquence d'éléments de syntaxe en une séquence de bits de données.

Le codage binaire inverse est l'opération inverse dans laquelle la séquence de bits de données est traitée, sur la base des données de contexte de codage binaire, pour recréer les éléments de syntaxe.

Le processus de décodage réalisé par le module 106 implique le traitement des éléments de syntaxe, demandés au module de codage binaire inverse 104, pour générer le flux de vidéo décompressée (DECOMPRESSED OUTPUT).

Un flux vidéo de test compressé selon la norme HEVC ou une autre norme basée sur une syntaxe, et approprié pour le test d'un décodeur correspondant, comme le décodeur 100 de la figure 1, pourrait être généré par un codeur sur la base d'une entrée de vidéo non compressée. Toutefois, un inconvénient d'une telle approche est qu'elle est consommatrice de temps et qu'il est difficile d'assurer une couverture de test complète.

La figure 2 illustre schématiquement un générateur de flux de test 200 selon un exemple de réalisation.

Le générateur 200 comprend un générateur pseudo-aléatoire conscient du contexte (CONTEXT-AWARE PSEUDO-RANDOM GENERATOR) 202, un module de codage binaire (BINARIZER) 204 et un module de traitement de décodage (DECODING PROCESS) 206.

Le module de traitement de décodage 206 réalise par exemple les mêmes fonctions que le bloc 106 correspondant de la figure 1. En plus, le module 206 fournit des données de contexte de décodage (DECODING CONTEXT) au générateur 202. Dans la norme HEVC, les données de contexte de décodage représentent, par exemple, le nombre de blocs déjà décodés dans l'image courante, la résolution, le nombre d'images de référence disponibles, etc. Lorsqu'un nouvel élément de syntaxe est injecté dans le module de traitement de décodage 206, cela va provoquer une mise à jour de l'état du module 206, modifiant ainsi les données de contexte de décodage.

Dans certains modes de réalisation, un flux de vidéo décompressée (DECOMPRESSED OUTPUT) est généré par le module de traitement de décodage 206 sur la base des éléments de syntaxe, et cette sortie de vidéo décompressée est utilisée comme sortie vidéo de référence lors d'un test ultérieur d'un décodeur.

Le générateur pseudo-aléatoire conscient du contexte 202 reçoit des requêtes pour des éléments de syntaxe (REQUEST SYNTAX ELEMENT) provenant du module de traitement de décodage 206, accompagnées des données de contexte de décodage. En réponse, le générateur pseudo-aléatoire 202 génère, pour chaque élément de syntaxe demandé, une valeur pseudo-aléatoire qui tombe dans une plage associée de l'élément de syntaxe, et fournit les valeurs à la fois au module de codage binaire 204 et au module de traitement de décodage 206. Sur la base de l'élément de syntaxe, et des données de contexte de codage binaire (BINARIZATION CONTEXT) provenant du module de traitement de décodage 206, le module de codage binaire 204 est ensuite capable de générer un flux de sortie compressé (COMPRESSED OUTPUT), qui constitue le flux de test.

La figure 3 illustre schématiquement plus en détail le module de traitement de décodage 206 de la figure 2 selon un exemple dans lequel il applique un décodage se conformant à la norme HEVC. Comme cela est illustré, ce module comprend par exemple un bloc de prédiction intra (INTRA PREDICTION) 302 et un bloc de prédiction inter (INTER PREDICTION) 304, chacun d'eux recevant les éléments de syntaxe à partir du générateur pseudo-aléatoire conscient du contexte 202. Les sorties des blocs 302 et 304 sont combinées au niveau d'un bloc 306 pour fournir des images prédites (PREDICTED PICTURE). Un bloc transquant inverse (INVERSE TRANSQUANT) 308 reçoit aussi les éléments de syntaxe, et génère des données (RESIDUALS) ayant les dimensions d'une image, mais qui correspondent à la différence entre deux images afin de corriger l'image prédite. La sortie du bloc transquant inverse 308 est fournie à un additionneur 310, qui ajoute cette sortie aux images prédites. La sortie de l'additionneur 310 est fournie à un filtre de boucle (LOOP FILTER) 312, avec les éléments de syntaxe, le filtre fournissant des images filtrées (FILTERED PICTURE) à un tampon d'images décodées (DECODED PICTURE BUFFER) 314, qui à son tour fournit la sortie vidéo décompressée. Le tampon d'images décodées 314 fournit aussi des images de référence (REFERENCE PICTURES) au bloc de prédiction inter 304.

Le module de traitement de décodage 206 fournit aussi les données de contexte de décodage, qui correspondent par exemple à l'état du module de traitement de décodage, et les données de contexte de codage binaire, qui par exemple, conformément à la norme HEVC, correspondent à la fréquence et/ou la probabilité de certaines valeurs d'éléments de syntaxe. Ces données sont par exemple mises à jour à chaque fois qu'un nouvel élément de syntaxe est injecté dans le module 206.

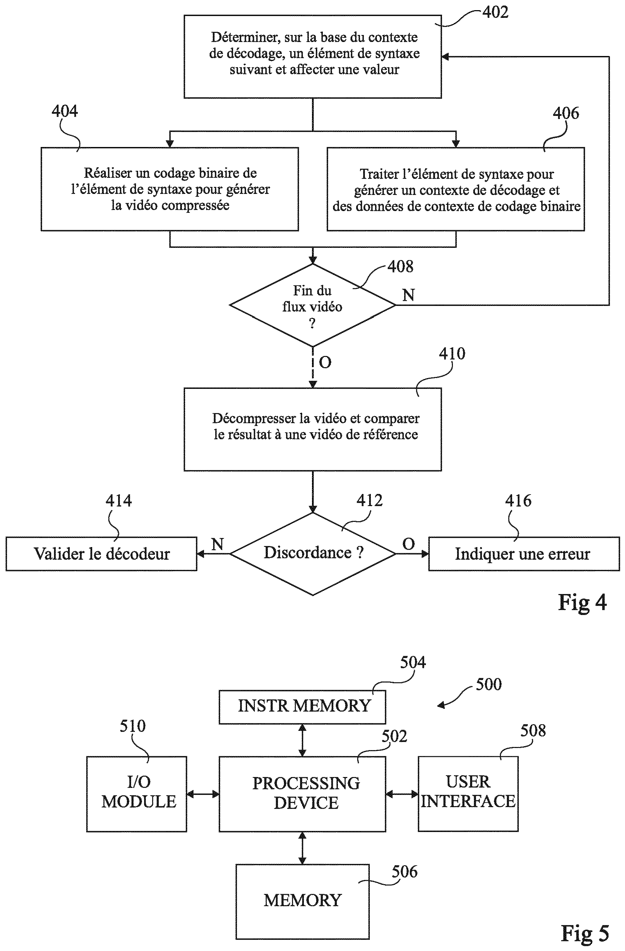

La figure 4 est un organigramme illustrant des exemples d'opérations dans un procédé de génération d'un flux de vidéo de test basé sur le générateur de flux de test 200 de la figure 2.

Dans une première opération 402, un élément de syntaxe suivant est demandé par le module de traitement de décodage 206, sur la base du contexte de décodage et/ou sur la base de la spécification de la norme concernée. Par exemple, pour un premier élément de syntaxe, l'état initial du module de traitement de décodage 206, avant qu'il ait reçu le premier bit d'un flux, est déterminé par la spécification de la norme de décodage vidéo seule, et cela indique quel premier élément de syntaxe doit être demandé. Dans la suite, les éléments de syntaxe à demander sont déterminés partiellement ou entièrement par les données de contexte de décodage.

Le générateur pseudo-aléatoire conscient du contexte 202 génère ensuite l'élément de syntaxe demandé et le fournit à la fois au module de traitement de décodage 206 et au module de codage binaire 204. En particulier, le générateur 202 génère par exemple une valeur pseudo-aléatoire pour l'élément de syntaxe, tout en respectant toutes les contraintes imposées sur l'élément de syntaxe par les données de contexte de décodage. Par exemple, les données de contexte de décodage peuvent indiquer qu'un certain élément de syntaxe doit avoir une valeur comprise entre 0 et 7, et le générateur 202 va ainsi générer de façon pseudo-aléatoire une valeur dans cette plage.

À titre d'exemple plus particulier, dans le cas d'une syntaxe d'échantillon PCM (modulation par codage d'impulsion) de la norme HEVC, une requête de valeurs d'échantillons de luminance et de chrominance pour chacun des pixels d'un bloc de codage peut être faite. La clause 7.3.8.7 de la norme HEVC référencée précédemment définit l'échantillon PCM de la façon suivante :

```
"pcm_sample( x0, y0, log2CbSize){
     for (i=0; i<1<<(log2CbSize << 1);i++)
       pcm_sample_luma[i] u(v)
   for (i=0; i<(1<< (log2CbSize << 1)) >>1;i++)
       pcm_sample_chroma[i] u(v)
}"
```

Le terme "log2CbSize" définit la taille du bloc de codage. Par exemple, une valeur de 3 va correspondre à un bloc de 8 par 8 pixels. Chaque échantillon est défini par un descripteur "u(v)", ce qui signifie qu'il a un nombre de bits défini par un autre élément de syntaxe, et ce paramètre fait par exemple partie des données de contexte de décodage. Le générateur 202 génère ainsi une valeur aléatoire pour chacun des échantillons PCM de luminance et de chrominance, d'un nombre approprié de bits.

L'opération 402 est suivie d'une opération 404 réalisée par le module de codage binaire 204 et d'une opération 406 réalisée par le module de traitement de décodage 206. Ces opérations peuvent être réalisées en parallèle ou en série les unes par rapport aux autres.

Dans l'opération 404, l'élément de syntaxe généré par le générateur 202 est codé par le module de codage binaire 204 pour obtenir des bits du flux vidéo compressé pour tester un décodeur. Pour cela, le module de codage binaire 204 reçoit aussi par exemple, en plus des éléments de syntaxe provenant du générateur 202, des données de contexte de codage binaire provenant du module de traitement de décodage 206.

Dans l'opération 406, l'élément de syntaxe provenant du générateur 202 est traité par le module de traitement de décodage 206 pour générer de nouvelles données de contexte de décodage et de nouvelles données de contexte de codage binaire. En outre, dans certains modes de réalisation, le module de traitement de décodage 206 génère aussi, sur la base de l'élément de syntaxe, des pixels d'une sortie de vidéo décompressée qui fournit par exemple une sortie de vidéo de référence pour tester le décodeur.

Dans une opération suivante 408, on détermine si la fin du flux vidéo a été atteinte. Par exemple, le générateur pseudo-aléatoire conscient du contexte 202 est agencé pour générer un certain nombre de trames de données de test. Si la totalité de ces trames n'a pas été générée, le procédé revient par exemple à l'opération 402 afin que l'élément de syntaxe suivant soit identifié et généré.

Par contre, si on détermine dans l'opération 406 que la fin du flux vidéo a été atteinte, dans certains modes de réalisation, le procédé se termine. Par exemple, le flux vidéo compressé, et optionnellement la sortie de vidéo décompressée, sont mémorisés sur un support de stockage numérique pour un usage ultérieur dans le test d'un décodeur.

Dans une variante, le procédé continue avec une opération suivante 410, dans laquelle le flux vidéo compressé est fourni au décodeur qui doit être testé. Le décodeur décompresse le flux de vidéo de test, et le résultat est par exemple comparé à une sortie de vidéo de référence.

Dans une opération suivante 412, on détermine si la comparaison réalisée dans l'opération 410 indique une discordance entre les flux de vidéo. Si ce n'est pas le cas, la conception du décodeur est par exemple validée dans une opération suivante 414. Dans l'autre cas, si des discordances sont trouvées, l'erreur est par exemple indiquée dans une opération 416. La partie du décodeur dans laquelle l'erreur a eu lieu est par exemple identifiée sur la base de l'emplacement de l'erreur dans la sortie vidéo.

Il sera clair pour l'homme de l'art que le générateur de flux de test 200 peut être mis en oeuvre entièrement ou partiellement par un circuit matériel spécifique, comme un ASIC (circuit intégré spécifique d'application) ou un FPGA (réseau de portes programmable sur site) et/ou par du logiciel exécuté par un dispositif de traitement approprié.

La figure 5 illustre un exemple de matériel 500 comprenant un dispositif de traitement (PROCESSING DEVICE) 502 adapté pour mettre oeuvre, sur la base de logiciel, au moins certaines des fonctions du générateur de flux de test 200.

Le dispositif de traitement 502 comprend un ou plusieurs processeurs sous le contrôle d'instructions de logiciel mémorisées dans une mémoire d'instructions (INSTR MEMORY) 504. Le dispositif de traitement 502 est aussi couplé à une mémoire (MEMORY) 506 qui par exemple mémorise au moins temporairement les éléments de syntaxe générés, les données de contexte, la sortie de vidéo décompressée et/ou le flux de vidéo compressée. Une interface d'utilisateur (USER INTERFACE) 508 est aussi par exemple prévue, celle-ci permettant à un opérateur d'adapter certains paramètres, comme le fait d'imposer ou de retirer des restrictions sur certain des éléments de syntaxe.

En outre, une interface de communication (I/O MODULE) 510 peut être couplée au dispositif de traitement 502, ce qui permet au flux de test et à la sortie de vidéo décompressée d'être transmis à une station distante utilisée pour tester un décodeur.

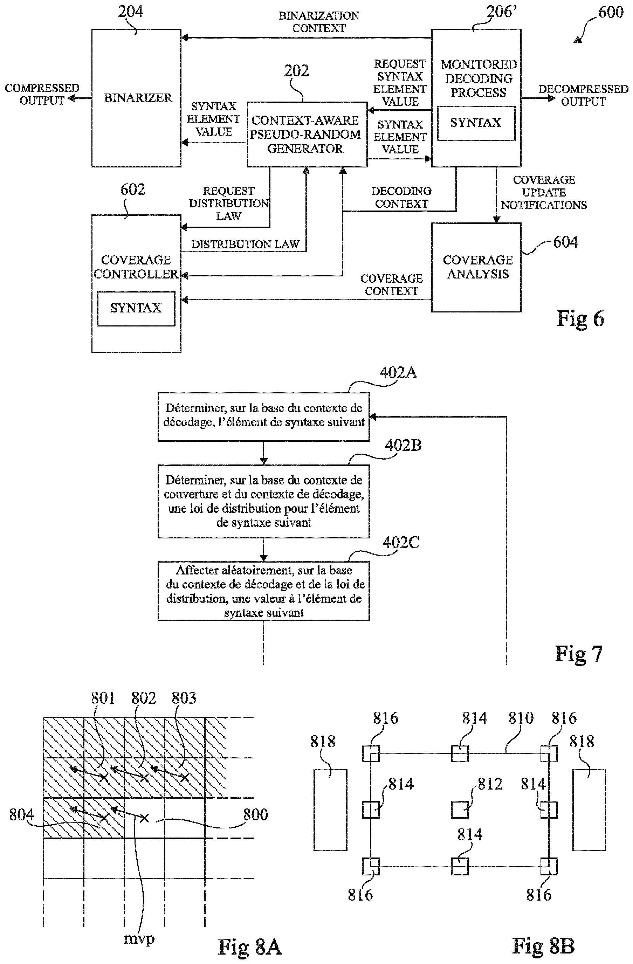

La figure 6 illustre schématiquement un générateur de flux de test 600 selon un autre exemple de réalisation. Les éléments communs avec le mode de réalisation de la figure 2 ont été référencés avec les mêmes références et ne seront pas décrits de nouveau en détail.

Dans le mode de réalisation de la figure 6, la couverture de test assurée par le flux de test généré est surveillée et adaptée afin d'améliorer l'étendue de la couverture de test et/ou de réduire la longueur de la séquence de test pour obtenir une couverture de test souhaitée.

Le module de traitement de décodage 206 est remplacé dans le mode de réalisation de la figure 6 par un module de traitement de décodage surveillé (MONITORED DECODING PROCESS) 206' qui fournit les données de contexte de décodage non seulement au générateur pseudo-aléatoire conscient du contexte 202, mais aussi à un contrôleur de couverture (COVERAGE CONTROLLER) 604. Le module 206' fournit aussi des notifications de mise à jour de couverture (COVERAGE UPDATE NOTIFICATIONS) à un module d'analyse (COVERAGE STATISTICS) 604, qui par exemple regroupe les notifications pour fournir des statistiques de couverture sur la base desquelles il génère des données de contexte de couverture (COVERAGE CONTEXT). Les données de contexte de couverture sont fournies au contrôleur de couverture 602. Le contrôleur de couverture 602 reçoit des requêtes pour des lois de distribution d'éléments de syntaxe (REQUEST DISTRIBUTION LAW) à partir du générateur pseudo-aléatoire 202, et répond en fournissant des lois de distribution de d'éléments de syntaxe (DISTRIBUTION LAW) au générateur 202, sur la base des données de contexte de décodage et des données de contexte de couverture. Une telle requête est par exemple faite pour chaque élément de syntaxe, ou pour seulement certains éléments de syntaxe sélectionnés.

Les notifications de mise à jour de couverture fournies par le module 206' comprennent par exemple une indication d'un ou plusieurs éléments nouvellement couverts, comme les valeurs de calculs particuliers effectués en fonction de la norme vidéo concernée, des résultats de décisions prises conformément à la norme vidéo concernée, et des indices de valeurs de succès de tables de la norme vidéo.

Le module d'analyse de couverture 604 regroupe les notifications de mise à jour de couverture fournies par le module 206', compare ce qui a été couvert à une liste indiquant les éléments potentiels à couvrir conformément à la norme vidéo concernée, et génère une liste d'éléments non couverts actuellement. Cette liste d'éléments non couverts forme par exemple les données de contexte de couverture.

On va maintenant décrire plus en détail le fonctionnement du circuit de la figure 6 en faisant référence à la figure 7.

La figure 7 est un organigramme illustrant le fonctionnement 402 de la figure 4 plus en détail dans le cas où on utilise le générateur de syntaxe 600 de la figure 6.

Dans une opération 402A, un nouvel élément de syntaxe est déterminé par le module de traitement de décodage surveillé 206', sur la base du contexte de décodage.

Dans une opération 402B, le contrôleur de couverture 602 détermine, par exemple en réponse à une requête provenant du générateur pseudo-aléatoire 202, une loi de distribution à utiliser par le générateur 202 pour calculer de façon aléatoire la valeur de l'élément de syntaxe suivant. Cette loi de distribution est par exemple déterminée sur la base des données de contexte de couverture et des données de contexte de décodage. Par exemple, la loi de distribution est sélectionnée afin d'augmenter la probabilité que se produise une valeur d'élément de syntaxe qui conduira à ce qu'un ou plusieurs éléments non couverts soient couverts.

Dans certains modes de réalisation, la loi de distribution définit, pour chaque valeur potentielle de l'élément de syntaxe, la probabilité que cette valeur soit sélectionnée. Par exemple, par défaut, la loi de distribution pour sélectionner la valeur d'éléments de syntaxe correspond à une distribution normale dans laquelle chaque valeur a une probabilité d'occurrence égale. Cette loi de distribution est par exemple modifiée par le contrôleur de couverture 602 pour favoriser une ou plusieurs valeurs spécifiques et/ou une ou plusieurs plages de valeurs. Par exemple, pour un élément de syntaxe donné ayant des valeurs potentielles comprises entre 0 et 255, il se peut que les valeurs multiples de 50 soient d'un intérêt particulier pour le test, en d'autres termes les valeurs 0, 50, 100, 150, 200 et 250. En supposant que les valeurs 50, 100 et 150 ont déjà été couvertes, la loi de distribution peut être modifiée pour favoriser les valeurs de 0, 200 et 250, par exemple en affectant une probabilité d'occurrence relativement élevée à ces valeurs, et une probabilité d'occurrence relativement faible à toutes les autres valeurs. En variante, une certaine plage de valeurs des éléments de syntaxe peut être intéressante, et la distribution de probabilité peut avoir à un pic se produisant dans cette plage.

Dans une opération 402C, une valeur est affectée à l'élément de syntaxe suivant par le générateur pseudo-aléatoire 202 sur la base des données de contexte de décodage et de la loi de distribution fournie par le contrôleur de couverture 602. Cette valeur est ensuite transmise au module de traitement de décodage surveillé 206' pour être utilisée comme valeur courante de l'élément de syntaxe.

Le procédé se poursuit par exemple avec les opérations 404, 406 et 408 du procédé de génération de flux de test de la figure 4, et optionnellement avec les opérations 410, 412, 414 et 416 du procédé de validation du décodeur. Dans l'opération 406, non seulement le contexte de décodage est mis à jour, mais des notifications de mise à jour de couverture sont par exemple générées afin de mettre à jour les statistiques de couverture.

Un exemple d'application du procédé de contrôle de la couverture de test va maintenant être décrit en faisant référence aux figures 8A et 8B dans le cas où les éléments de syntaxe concernent des vecteurs de mouvement selon une norme vidéo comme MPEG4 AVC.

La figure 8A illustre une partie d'une image divisée en macroblocs, chaque macrobloc correspondant par exemple à un bloc de 16 par 16 pixels. Pendant le décodage, les macroblocs sont par exemple décodés dans un ordre de balayage tramé commençant dans le coin supérieur gauche de chaque image. Le module de traitement de décodage surveillé 206' calcule par exemple un vecteur de mouvement pour chaque macrobloc. Des exemples des vecteurs de mouvement sont représentés par des flèches en figure 8A. Chaque vecteur de mouvement sélectionne une zone de l'image de référence à utiliser pour le décodage d'un macrobloc courant. Chaque vecteur de mouvement comprend une composante x $mv[0]$ et une composante y $mv[1]$ déterminées sur la base des équations suivant :

$$mv[0] = mvp[0] + mvd[0]$$

$$mv[1] = mvp[1] + mvd[1]$$

où = $mvp[0]$ est la composante x d'un prédicteur de vecteur de mouvement, $mvd[0]$ est la composante x d'une différence de vecteur de mouvement, $mvp[1]$ est la composante y d'un prédicteur de vecteur de mouvement et $mvd[1]$ est la composante y d'une différence de vecteur de mouvement.

Le prédicteur de vecteur de mouvement mvp est par exemple calculé sur la base des vecteurs de mouvement d'un ou plusieurs macroblocs décodés précédemment. Dans un exemple, pour un macrobloc donné, comme celui référencé 800 en figure 8A, le prédicteur de vecteur de mouvement est calculé sur la base du vecteur de mouvement des trois macroblocs référencés 801, 802 et 803, et du macrobloc situé à sa gauche, référencé 804. Les valeurs de $mvd[0]$ et de $mvd[1]$ sont par exemple déterminées sur la base des quatre éléments de syntaxe suivants :

abs_mvd_greater0_flag : [0;1]
abs_mvd_greater1_flag : [0;1]
abs_mvd_minus1 : [0:n]
mvd_sign : [0;1]

où dans le cas où le drapeaux "abs_mvd_greater0_flag" est à zéro, la valeur de mvd va être mise à zéro, et dans le cas où "abs_mvd_greater1_flag" est à zéro, la valeur de mvd va être mise à un. La valeur de abs_mvd_minus1 est dans la plage de 0 à n, où n dépend par exemple du contexte de décodage.

Ainsi, les données de contexte de décodage fournies par le module 206' indiquent par exemple les vecteurs de mouvement de macroblocs décodés précédemment. Les notifications de mise à jour de couverture fournies aussi par le module 206' indiquent par exemple les zones de l'image sélectionnées comme zones de référence sur la base de vecteurs de mouvement générés précédemment. Les données de contexte de couverture indiquent par exemple des zones non couvertes de l'image qui sont intéressantes pour le test et qui devrait être couvertes par le flux de test.

Afin de générer un vecteur de mouvement pour un macrobloc courant, le module 206' émet par exemple une requête vers le générateur pseudo-aléatoire conscient du contexte 202 pour les quatre éléments de syntaxe indiqués précédemment. Le générateur 202 détermine ensuite, sur la base du contexte de décodage, la valeur de n, et ensuite par exemple demande la loi de distribution au contrôleur de couverture 602. Le contrôleur de couverture 602 génère par exemple la loi de distribution sur la base des données de contexte de couverture fournies par le bloc d'analyse de couverture 604 et sur la base du contexte de décodage. Par exemple, sur la base du contexte de décodage, le contrôleur de couverture 602 est apte à calculer les valeurs de prédicteur de vecteur de mouvement courantes mvp[0] et mvp[1]. Il est ainsi capable de déterminer les valeurs des éléments de syntaxe qui sont les plus susceptibles d'entraîner des vecteurs de mouvement non testés qui conduisent à la sélection de zones de l'image de référence qui sont intéressantes à tester, comme cela est indiqué par les données de contexte de couverture.

La figure 8B illustre une image de référence 810 et donne un exemple de zones d'images intéressantes pour le test comme zones de référence sur la base de vecteurs de mouvement. Il est aussi par exemple intéressant que soient testés des vecteurs de mouvement qui entraînent la sélection d'une zone de référence 812 tombant au centre de l'image, de zones de référence 814 qui tombent sur chaque bord de l'image, de zones de référence 816 qui tombent au niveau de chaque coin de l'image et de zones de référence 818 qui tombent sur la gauche et la droite de l'image.

Un avantage des modes de réalisation décrits ici est que, en prévoyant un générateur de flux de vidéo de test qui utilise des parties d'un décodeur de vidéo et des parties d'un codeur de vidéo, un flux de test ayant un format valide peut être généré de façon simple. En générant de façon pseudo-aléatoire les valeurs d'éléments de syntaxe, on peut atteindre une grande couverture de test sans avoir besoin de baser le flux de test sur une source de vidéo non compressée. En outre, en utilisant des données de contexte provenant du décodeur de syntaxe, des contraintes peuvent être imposées sur la génération d'éléments de syntaxe pour assurer qu'un flux valide est créé.

En outre, en adaptant la loi de distribution utilisée pour générer de façon pseudo-aléatoire les éléments de syntaxe, la couverture du test peut être améliorée et/ou la longueur du flux de test pour une couverture de test donnée peut être réduite, réduisant ainsi le temps de validation.

Avec la description ainsi faite d'au moins un mode de réalisation illustratif, diverses altérations, modifications et améliorations apparaîtront facilement à l'homme de l'art.

Par exemple, il apparaîtra clairement à l'homme de l'art que les divers éléments décrits en relation avec les divers modes de réalisation pourraient être combinés, dans des variantes de réalisation, selon des combinaisons quelconques.

**Revendications**

1. Générateur de flux de test pour générer un flux de vidéo compressée pour tester un décodeur de vidéo, le générateur comprenant :

   un générateur pseudo-aléatoire conscient du contexte (202) adapté à générer des valeurs pseudo-aléatoires d'éléments de syntaxe sur la base de données de contexte de décodage ;
   un module de traitement de décodage (206, 206') adapté à traiter les valeurs d'éléments de syntaxe et à générer les données de contexte de décodage et des données de contexte de codage binaire ; et
   un module de codage binaire (204) adapté à coder les valeurs d'éléments de syntaxe sur la base des données de contexte de codage binaire afin de générer le flux de vidéo compressée.

2. Générateur de flux de test selon la revendication 1, dans lequel le module de traitement de décodage (206) est en outre adapté à générer une sortie de vidéo décompressée sur la base des valeurs d'éléments de syntaxe.

3. Générateur de flux de test selon la revendication 1 ou 2, dans lequel le module de codage binaire (204) et le module de traitement de décodage (206) sont adaptés à traiter les éléments de syntaxe conformément à la norme HEVC (codage vidéo à haute efficacité).

4. Générateur de flux de test selon l'une quelconque des revendications 1 à 3, dans lequel le générateur pseudo-aléatoire conscient du contexte (202) est adapté à générer une ou plusieurs des valeurs pseudo-aléatoires sur la base d'une loi de distribution de probabilités, le générateur de flux de test comprenant en outre un contrôleur de couverture (602) adapté à définir au moins une partie de la loi de distribution de probabilité pour un ou plusieurs des éléments de syntaxe.

5. Générateurs de flux de test selon la revendication 4, dans lequel le contrôleur de couverture (602) est adapté à générer la loi de distribution de probabilité sur la base des données de contexte de décodage et sur la base de données de contexte de couverture indiquant des éléments non couverts à couvrir par le module de traitement de décodage.

6. Générateur de flux de test selon la revendication 5, comprenant en outre un module d'analyse de couverture (604) adapté à générer les données de contexte de couverture sur la base d'une ou plusieurs notifications fournies par le module de traitement de décodage (206, 206') indiquant l'étendue de la couverture de test.

7. Générateur de flux de test selon la revendication 5 ou 6, dans lequel lesdites une ou plusieurs valeurs pseudo-aléatoires sont des valeurs à utiliser pour le calcul d'un ou plusieurs vecteurs de mouvement par le module de traitement de décodage (206, 206'), les vecteurs de mouvement sont utilisés par le module de traitement de décodage (206, 206') pour sélectionner des zones d'une image de référence, et dans lequel les données de contexte de couverture indiquent une ou plusieurs zones de l'image de référence qui ne sont pas encore sélectionnées et à couvrir par le flux de test.

8. Procédé de génération, par un générateur de flux de test, d'un flux de vidéo compressée pour tester un décodeur de vidéo, le procédé comprenant :

générer, par un générateur pseudo-aléatoire conscient du contexte (202), des valeurs pseudo-aléatoires d'éléments de syntaxe sur la base de données de contexte de décodage ;
traiter, par un module de traitement de décodage (206), les valeurs d'éléments de syntaxe pour générer les données de contexte de décodage et des données de contexte de codage binaire ; et
coder, par un module de codage binaire (204), les valeurs d'éléments de syntaxe sur la base des données de contexte de codage binaire afin de générer le flux de vidéo compressée.

9. Procédé selon les revendications 8, comprenant en outre le fait de demander, par le module de traitement de décodage (206), les valeurs d'éléments de syntaxe au générateur pseudo-aléatoire conscient du contexte (202).

10. Procédé selon la revendication 8 ou 9, dans lequel la génération desdites une ou plusieurs valeurs pseudo-aléatoires par le générateur pseudo-aléatoire conscient du contexte (202) est basée sur une loi de distribution de probabilité, le procédé comprenant en outre la définition, par un contrôleur de couverture (602), d'au moins une partie de la loi de distribution de probabilité pour un ou plusieurs des éléments de syntaxe.

11. Procédé selon la revendication 10, dans lequel la génération de la loi de distribution de probabilité par le contrôleur de couverture (602) est basée sur les données de contexte de décodage et sur des données de contexte de couverture indiquant des éléments non couverts à couvrir par le module de traitement de décodage.

12. Procédé selon la revendication 11, comprenant en outre la génération, par le module d'analyse de couverture (604), des données de contexte de couverture sur la base d'une ou plusieurs notifications fournies par le module de traitement de décodage (206, 206') indiquant l'étendue de la couverture de test.

13. Procédé selon la revendication 11 ou 12, dans lequel lesdites une ou plusieurs valeurs pseudo-aléatoires sont des valeurs à utiliser pour le calcul d'un ou plusieurs vecteurs de mouvement par le module de traitement de décodage (206, 206'), les vecteurs de mouvement sont utilisés par le module de traitement de décodage (206, 206') pour sélectionner des zones d'une image de référence, et dans lequel les données de contexte de couverture indiquent une ou plusieurs zones de l'image de référence qui ne sont pas encore sélectionnées et à couvrir par le flux de test.

14. Procédé pour tester un décodeur comprenant :

générer un flux de vidéo compressée conformément au procédé de l'une quelconque des revendications 8 à 13;
décoder, par le décodeur, le flux de vidéo compressée pour générer une sortie de vidéo décompressée ; et
comparer la sortie de vidéo décompressée à une sortie de vidéo de référence.

15. Procédé selon la revendication 14, comprenant en outre le fait de générer, par le module de traitement de décodage (206), la sortie de vidéo de référence.

## Patentansprüche

1. Ein Teststromerzeuger zum Erzeugen eines komprimierten Videostroms für das Testen eines Videodecodierers, wobei der Erzeuger aufweist:

einen kontextuellen, pseudozufälligen Erzeuger (202), der ausgebildet ist zum Erzeugen von pseudozufälligen Werten von Syntaxelementen basierend auf Decodierungskontextdaten,
ein Decodierungsverarbeitungsmodul (206, 206'), das ausgebildet ist zum Verarbeiten der Syntaxelementwerte und zum Erzeugen der Decodierungskontextdaten und von Binarisierungskontextdaten, und

ein Binarisierermodul (204), das ausgebildet ist zum Codieren der Syntaxelementwerte basierend auf den Binarisierungskontextdaten, um den komprimierten Videostrom zu erzeugen.

2. Teststromerzeuger nach Anspruch 1, wobei das Decodierungsverarbeitungsmodul (206) weiterhin ausgebildet ist zum Erzeugen einer dekomprimierten Videoausgabe basierend auf den Syntaxelementwerten.

3. Teststromerzeuger nach Anspruch 1 oder 2, wobei das Binarisierungsmodul (204) und das Decodierungsverarbeitungsmodul (206) ausgebildet sind zum Verarbeiten der Syntaxelemente gemäß dem HEVC (High Efficiency Video Coding)-Standard.

4. Teststromerzeuger nach einem der Ansprüche 1 bis 3, wobei der kontextuelle, pseudozufällige Erzeuger (202) ausgebildet ist zum Erzeugen von einem oder mehreren der pseudozufälligen Werte basierend auf einem Wahrscheinlichkeitsverteilungsgesetz, wobei der Teststromerzeuger weiterhin eine Abdeckungs-Steuereinrichtung (602) aufweist, die ausgebildet ist zum Definieren wenigstens eines Teils des Wahrscheinlichkeitsverteilungsgesetzes für eines oder mehrere der Syntaxelemente.

5. Teststromerzeuger nach Anspruch 4, wobei die Abdeckungs-Steuereinrichtung (602) ausgebildet ist zum Erzeugen des Wahrscheinlichkeitsverteilungsgesetzes basierend auf den Decodierungskontextdaten und basierend auf Abdeckungskontextdaten, die nicht abgedeckte und durch das Decodierungsverarbeitungsmodul abzudeckende Elemente angeben.

6. Teststromerzeuger nach Anspruch 5, der weiterhin ein Abdeckungsanalysemodul (604) aufweist, das ausgebildet ist zum Erzeugen der Abdeckungskontextdaten basierend auf einer oder mehreren Benachrichtigungen, die durch das Decodierungsverarbeitungsmodul (206, 206') vorgesehen werden und die Größe der Testabdeckung angeben.

7. Teststromerzeuger nach Anspruch 5 oder 6, wobei der eine oder die mehreren pseudozufälligen Werte für die Berechnung eines oder mehrerer Bewegungsvektoren durch das Decodierungsverarbeitungsmodul (206, 206') zu verwendende Werte sind, wobei die Bewegungsvektoren durch das Decodierungsverarbeitungsmodul (206, 206') verwendet werden, um Zonen eines Referenzbilds auszuwählen, und wobei die Abdeckungskontextdaten eine oder mehrere Zonen des Referenzbilds angeben, die noch nicht ausgewählt wurden und durch den Teststrom abzudecken sind.

8. Ein Verfahren zum Erzeugen, durch einen Teststromerzeuger, eines komprimierten Videostroms für das Testen eines Videodecodierers, wobei das Verfahren aufweist:

Erzeugen, durch einen kontextuellen, pseudozufälligen Erzeuger (202), von pseudozufälligen Werten von Syntaxelementen basierend auf Decodierungskontextdaten,

Verarbeiten, durch ein Decodierungsverarbeitungsmodul (206), der Syntaxelementwerte für das Erzeugen der Decodierungskontextdaten und von Binarisierungskontextdaten, und

Codieren, durch ein Binarisierungsmodul (204), der Syntaxelementwerte basierend auf den Binarisierungskontextdaten, um den komprimierten Videostrom zu erzeugen.

9. Verfahren nach Anspruch 8, das weiterhin das Anfragen, durch das Decodierungsverarbeitungsmodul (206), der Syntaxelementwerte von dem kontextuellen, pseudozufälligen Generator (202) aufweist.

10. Verfahren nach Anspruch 8 oder 9, wobei das Erzeugen des einen oder der mehreren pseudozufälligen Werte durch den kontextuellen, pseudozufälligen Erzeuger (202) auf einem Wahrscheinlichkeitsverteilungsgesetz basiert, wobei das Verfahren weiterhin das Definieren, durch eine Abdeckungs-Steuereinrichtung (602), wenigstens eines Teils des Wahrscheinlichkeitsverteilungsgesetzes für eines oder mehrere der Syntaxelemente aufweist.

11. Verfahren nach Anspruch 10, wobei das Erzeugen des Wahrscheinlichkeitsverteilungsgesetzes durch die Abdeckungs-Steuereinrichtung (602) auf den Decodierungskontextdaten und auf Abdeckungskontextdaten, die nicht abgedeckte und durch das Decodierungsverarbeitungsmodul abzudeckende Elemente angeben, basiert.

12. Verfahren nach Anspruch 11, das weiterhin das Erzeugen, durch ein Abdeckungsanalysemodul (604), der Abdeckungskontextdaten basierend auf einer oder mehreren durch das Decodierungsverarbeitungsmodul (206, 206') vorgesehenen Benachrichtigungen, die die Größe der Testabdeckung angeben, aufweist.

13. Verfahren nach Anspruch 11 oder 12, wobei der eine oder die mehreren pseudozufälligen Werte für die Berechnung eines oder mehrerer Bewegungsvektoren durch das Decodierungsverarbeitungsmodul (206, 206') zu verwendende Werte sind, wobei die Bewegungsvektoren durch das Decodierungsverarbeitungsmodul (206, 206') verwendet werden, um Zonen eines Referenzbilds auszuwählen, und wobei die Abdeckungskontextdaten eine oder mehrere Zonen des Referenzbilds angeben, die noch nicht ausgewählt wurden und durch den Teststrom abzudecken sind.

14. Ein Verfahren zum Testen eines Decodierers, aufweisend:

Erzeugen eines komprimierten Videostroms gemäß dem Verfahren eines der Ansprüche 8 bis 13,
Decodieren, durch den Decodierer, des komprimierten Videostroms für das Erzeugen einer dekomprimierten Videoausgabe, und
Vergleichen der dekomprimierten Videoausgabe mit einer Referenz-Videoausgabe.

15. Verfahren nach Anspruch 14, das weiterhin das Erzeugen, durch das Decodierungsverarbeitungsmodul (206), der Referenzvideoausgabe aufweist.

**Claims**

1. A test stream generator for generating a compressed video stream for testing a video decoder, the generator comprising:

a context-aware pseudo-random generator (202) adapted to generate pseudo-random values of syntax elements based on decoding context data;
a decoding process module (206, 206') adapted to process the syntax element values and to generate the decoding context data and binarization context data; and
a binarizer module (204) adapted to encode the syntax element values based on the binarization context data in order to generate said compressed video stream.

2. The test stream generator of claim 1, wherein the decoding process module (206) is further adapted to generate a decompressed video output based on the syntax element values.

3. The test stream generator of claim 1 or 2, wherein the binarizer module (204) and the decoding process module (206) are adapted to process the syntax elements according to the HEVC (high efficiency video coding) standard.

4. The test stream generator of any of claims 1 to 3, wherein the context-aware pseudo-random generator (202) is adapted to generate one or more of the pseudo random values based on a probability distribution law, the test stream generator further comprising a coverage controller (602) adapted to define at least part of said probability distribution law for one or more of said syntax elements.

5. The test stream generator of claim 4, wherein the coverage controller (602) is adapted to generate the probability distribution law based on the decoding context data and based on coverage context data indicating non-covered items to be covered by the decoding process module.

6. The test stream generator of claim 5, further comprising a coverage analysis module (604) adapted to generate the coverage context data based on one or more notifications provided by the decoding process module (206, 206') indicating the extent of test coverage.

7. The test stream generator of claim 5 or 6, wherein the one or more pseudo-random values are values to be used for the calculation of one or more motion vectors by the decoding process module (206, 206'), the motion vectors are used by the decoding process module (206, 206') to select zones of a reference image, and wherein the coverage context data indicates one or more zones of the reference image not yet selected and to be covered by the test stream.

8. A method of generating, by a test stream generator, a compressed video stream for testing a video decoder, the method comprising:

generating, by a context-aware pseudo-random generator (202), pseudo-random values of syntax elements based on decoding context data;
processing, by a decoding process module (206), the syntax element values to generate the decoding context data and binarization context data; and
encoding, by a binarizer module (204), the syntax element values based on the binarization context data in order to generate said compressed video stream.

9. The method of claim 8, further comprising requesting, by the decoding process module (206), the syntax element values from the context-aware pseudo-random generator (202).

10. The method of claim 8 or 9, wherein generating the one or more pseudo-random values by the context-aware pseudo-random generator (202) is based on a probability distribution law, the method further comprising defining, by a coverage controller (602), at least part of said probability distribution law for one or more of said syntax elements.

11. The method of claim 10, wherein generating the probability distribution law by the coverage controller (602) is based on the decoding context data and on coverage context data indicating non-covered items to be covered by the decoding process module.

12. The method of claim 11, further comprising generating, by a coverage analysis module (604), the coverage context data based on one or more notifications provided by the decoding process module (206, 206') indicating the extent of test coverage.

13. The method of claim 11 or 12, wherein the one or more pseudo-random values are values to be used for the calculation of one or more motion vectors by the decoding process module (206, 206'), the motion vectors are used by the decoding process module (206, 206') to select zones of a reference image, and wherein the coverage context data indicates one or more zones of the reference image not yet selected and to be covered by the test stream.

14. A method of testing a decoder comprising:

   generating a compressed video stream according to the method of any of claims 8 to 13;
   decoding, by the decoder, the compressed video stream to generate a decompressed video output; and
   comparing the decompressed video output with a reference video output.

15. The method of claim 14, further comprising generating, by the decoding process module (206), the reference video output.

Fig 1

Fig 2

Fig 3

402

Déterminer, sur la base du contexte de décodage, un élément de syntaxe suivant et affecter une valeur

404

Réaliser un codage binaire de l'élément de syntaxe pour générer la vidéo compressée

406

Traiter l'élément de syntaxe pour générer un contexte de décodage et des données de contexte de codage binaire

408

Fin du flux vidéo ?

N

O

410

Décompresser la vidéo et comparer le résultat à une vidéo de référence

414

Valider le décodeur

N

412

Discordance ?

O

416

Indiquer une erreur

Fig 4

504

INSTR MEMORY

500

510

I/O MODULE

502

PROCESSING DEVICE

508

USER INTERFACE

506

MEMORY

Fig 5

## Fig 6

204 — BINARIZER
COMPRESSED OUTPUT

BINARIZATION CONTEXT

206' — MONITORED DECODING PROCESS — SYNTAX — DECOMPRESSED OUTPUT

202 — CONTEXT-AWARE PSEUDO-RANDOM GENERATOR

SYNTAX ELEMENT VALUE

REQUEST SYNTAX ELEMENT VALUE

SYNTAX ELEMENT VALUE

600

602 — COVERAGE CONTROLLER — SYNTAX

REQUEST DISTRIBUTION LAW

DISTRIBUTION LAW

DECODING CONTEXT

COVERAGE UPDATE NOTIFICATIONS

604 — COVERAGE ANALYSIS

COVERAGE CONTEXT

## Fig 7

402A — Déterminer, sur la base du contexte de décodage, l'élément de syntaxe suivant

402B — Déterminer, sur la base du contexte de couverture et du contexte de décodage, une loi de distribution pour l'élément de syntaxe suivant

402C — Affecter aléatoirement, sur la base du contexte de décodage et de la loi de distribution, une valeur à l'élément de syntaxe suivant

## Fig 8A

801 802 803 804 800 mvp

## Fig 8B

816 814 810 816 818 818 814 812 814 816 814 816

15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2008131484 A

- US 7076392 B

**Littérature non-brevet citée dans la description**

- Constrained-Random Bitstream Generation for H.264/AVC Decoder Conformance Test. **DE JINHY-UN CHO et al.** IEEE Transactions on Consumer Electronics. IEEE Service Center, 01 Mai 2010, vol. 56, 848-855

- Union Internationale des Télécommunications) dans la recommandation ITU-T H.265. *High efficiency video encoding, SERIES H: AUDIOVISUAL AND MUTLIMEDIA SYSTEMS, Infrastructure of audiovisual services - Coding of moving video,* Avril 2013
- **G.SULLIVAN et al.** Overview of the High Efficiency Video Coding (HEVC) Standard. *Pre-publication draft to appear in IEEE Trans. on circuits and systems for video technology,* Décembre 2012